# EUROPEAN PATENT SPECIFICATION

(11) **EP 3 002 493 B1**
(45) Date of publication and mention of the grant of the patent: **16.08.2017**
(21) Application number: 15185673.9
(22) Date of filing: 17.09.2015
(51) Int. Cl.: F16L 27/11, F16L 51/02, F01N 13/18

(54) **THERMALLY INSULATED COUPLING DEVICE FOR EXHAUST PIPES OF ENDOTHERMIC ENGINES**
THERMISCH ISOLIERTE KUPPLUNGSVORRICHTUNG FÜR AUSPUFFROHRE VON ENDOTHERMEN MOTOREN
DISPOSITIF DE COUPLAGE ISOLÉ THERMIQUEMENT POUR TUYAUX D'ÉCHAPPEMENT DE MOTEURS ENDOTHERMIQUES

(30) Priority: 30.09.2014 IT TO20140781
(43) Date of publication of application: 06.04.2016
(73) Proprietor: Flexider Automotive Italy S.r.l., 10156 Torino (IT)
(72) Inventor: SANTARELLI, Mario, 10156 TORINO (IT)
(74) Representative: Plebani, Rinaldo

(56) References cited:
- EP-A1- 0 448 769
- DE-A1- 3 702 243
- DE-A1- 19 603 594
- DE-A1-102011 010 332
- GB-A- 759 306

## Description

The present invention relates to a thermally insulated coupling device for exhaust pipes of endothermic engines, which is particularly simple and inexpensive to manufacture and highly effective.

It is known that the exhaust systems of combustion engines in modern vehicles are provided with one or more flexible couplings, defined here and in the description below by the general term 'coupling devices' or 'compensator devices', arranged between the engine's exhaust manifold and the various pipes and other parts of the vehicle's exhaust system.

These devices not only have the task of connecting parts of exhaust piping subjected to high temperatures in a fluid-tight manner, but also of compensating for positioning shifts/errors of the various exhaust pipe sections and/or reducing/eliminating vibrations transmitted from the engine to the exhaust system in general and to some more delicate components thereof, such as the catalytic converter, in particular.

According to that set forth, for example, in EP0657683, a coupling device for exhaust pipes of vehicle engines is formed by a fluid-tight, flexible, bellows-shaped metal sleeve, in turn provided with several flexible non-sealing and strengthening metal sleeves, in particular a tubular flow guide element or liner, coaxially arranged inside the flexible bellows sleeve and made from a metal strip helically wound and seamed to form a hose, and an external sheath made of braided wire; damping elements made of compressed wire are inserted between the bellows and at least one of the strengthening sleeves.

Although quite efficient, this type of coupling device, being entirely of metal, allows a high level of heat transfer to the outside. This, on one hand, can be inconvenient as the emitted heat can radiate to the vehicle's interior, forcing heat insulating panels to be provided; on the other hand, the heat loss can cool the exhaust gas from the engine excessively and thus reduce the efficiency of the catalytic converter.

To solve this problem, numerous attempts have been made to insert heat insulation in at least the coupling device that connects the exhaust manifold to the catalytic converter, as shown for example in FR2568309 or US5346263. However, all systems studied up until now have not been free of drawbacks; for example, they are expensive, bulky or difficult to manufacture and/or modify the mechanical performance of the coupling device, for example making it excessively stiff. DE3702243*,* GB759306*,* EP0448796*,* DE19603594 *and* DE102011010332 *do not solve these problems.*

The object of the invention is therefor to solve these drawbacks by means of a coupling device for exhaust pipes of endothermic engines of compact dimensions, low weight, low manufacturing costs and high operational efficiency, both in terms of duration and vibration and noise damping, and which is also thermally insulated to limit heat dispersion to the outside.

According to the invention, a coupling device for exhaust pipes of endothermic engines is provided, as defined in the appended claims.

In particular, the coupling device or 'compensator' according to the invention 1, comprises a fluid-tight flexible metal bellows provided with a plurality of annular undulations axially spaced apart from one another and having a first and a second cylindrical end, opposite to each other and free from undulations, a flow guide liner radially arranged inside the metal bellows, with which it is coaxial, to shield the undulations, and a first flexible metal hose radially arranged on the outside of the metal bellows, with which it is coaxial, to shield and protect the undulations,

According to the invention, the first flexible metal hose is chosen to be formed by a helical stripwound metal element obtained from a first metal strip, helically wound with its opposite lateral edges seamed together so as to form a hose, with a radial gap present between the first flexible metal hose formed by the stripwound metal element and respective radially external ridges of the undulations of the flexible metal bellows filled with a thermally insulating material, possibly with other respective axial spaces present between one undulation and another along the entire length of the metal bellows.

In addition, a first and a second opposite ends of the first flexible metal hose formed by a stripwound metal element are respectively fixed to first and second rigid head support elements, which are externally fixed to the metal bellows on the first and second cylindrical ends of the metal bellows, respectively, so as to project radially outwards from the side opposite to the flow guide liner. The fastening can be made in different ways, via welding or mechanical means.

According to a further aspect of the invention, a continuous sealing strip is preferably arranged between the seamed-together opposite lateral edges of the helically wound metal strip forming the helical stripwound metal element with which the first flexible metal hose is made, so that the first flexible metal hose is fluid-tight, like the metal bellows.

The thermally insulating material used in the invention is able to resist without alteration at the high temperatures present in the combustion gas of vehicles and is preferably constituted by glass fibre or a ceramic fibre in mat, flock, foam or yarn form, possibly mixed or coupled with, for example, superimposed layers of a metal material, such as wire mesh for example, for strengthening and/or improving vibration damping.

In this way, the thermally insulating material not only slows and limits outward heat dispersion from the exhaust gas flowing in the flow guide liner, but also directly contributes to the overall rigidity of the system composed of the flexible bellows, the first flexible metal hose, formed by a helical stripwound metal element, and the thermally insulating material that completely fills a hollow space delimited between them and the opposite rigid head support elements.

In particular, the choice of a stripwound metal element as constituting the flexible metal hose external to the bellows, combined with the replacement of damping element in compressed metal wire with a filling or "padding" of suitable thermally insulating material (possibly mixed or coupled with overlaid compressed metal wire) interposed between the metal bellows and the metal hose external to the bellows, surprisingly enables achieving a quality of vibration damping and flexibility with the device comparable to those of coupling or compensation devices that are not heat insulated. In addition, the limited outward transmission of heat allows inserting a seal between the seamed edges of the flexible metal hose external to the flexible coupling, thereby making it a fluid-tight element, which prevents the dispersion of small particles of the thermally insulating material into the environment, which would otherwise have to be prevented with other systems, known in the art, and all causing increases in bulk and rigidity.

Further characteristics and advantages of the invention will appear clear from the description below of two non-limitative embodiments, provided purely by way of example, with reference to the figures in the accompanying drawings, in which:
- Figure 1 shows a longitudinal view, in elevation and in radial section, of a coupling device for exhaust pipes of endothermic engines made according to the invention;
- Figure 2 shows, on a larger scale, a constructional detail of a coupling device for exhaust pipes of endothermic engines made according to a possible variant of the device in Figure 1; and
- Figures 3 and 4 show, on an even larger scale and always in radial section, a detail of a component of the devices in Figures 1 and 2 according to two different possible embodiments.

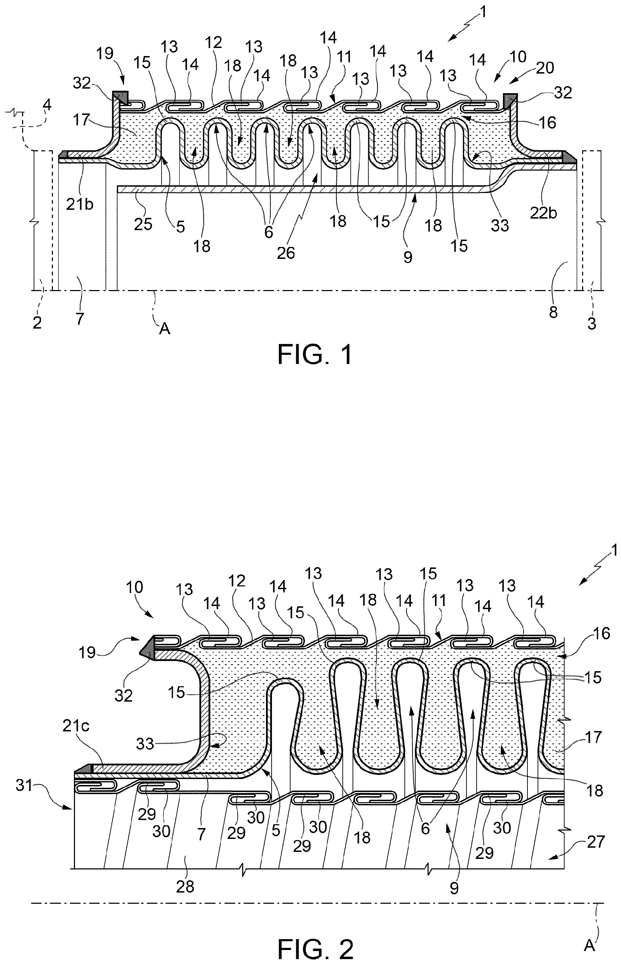

Referring to Figures 1 and 2, reference numeral 1 indicates, as a whole, a coupling device for exhaust pipes 2 and 3 of endothermic engines, shown only schematically with broken lines in Figure 1.

In particular, the coupling device 1 is designed for being arranged downstream of an exhaust manifold 4 of an endothermic engine, shown in Figure 1 with broken lines, only in part and only schematically for simplicity.

The coupling device 1, hereinafter also indicated as a 'compensator device', comprises a flexible metal bellow 5 having an axis of symmetry A and normally made of stainless steel and fluid-tight; the metal bellow 5 is provided with a plurality of annular undulations 6 axially spaced apart from one another and further has a first end 7 and a second end 8, both cylindrical, opposite to each other and free from undulations 6.

The coupling device 1 also comprises a flow guide liner 9 radially arranged inside the metal bellows 5, with which it is coaxial, for hydrodynamically shielding the undulations 6, and a first flexible metal hose 10 radially arranged on the outside of the metal bellows 5, with which it is coaxial, for shielding and protecting the undulations 6.

According to a first aspect of the invention, the first flexible metal hose 10, radially external to the metal bellow 5, is made by means of a helical stripwound metal element 11 obtained from a first metal strip 12, helically wound with its opposite lateral edges 13 and 14 seamed together so as to form a hose. The metal strip 12 is preferably also made of a stainless steel.

In combination with the choice of a specific type of flexible metal hose 10, a gap or radial play 16 is present between the hose 10, formed by the stripwound metal element 11, and respective radially outer ridges 15 of the undulations 6 of the flexible metal bellow 5, which gap is completely filled with a thermally insulating material 17 that is arranged precisely to fill the gap or radial play 16. According to the preferred embodiment shown, the insulating material 7 also fills respective axial spaces 18 between one undulation 6 and another along the entire metal bellow 5.

The thermally insulating material 17 is chosen so as to able to resist without alteration to the high temperatures present in the combustion gas of vehicles and in the preferred embodiment is constituted by glass fibre or a ceramic fibre in mat, flock, foam or yarn form, on its own or mixed/coupled with a strengthening metal material, for example compressed metal wire; for example a multilayer could be formed in which the insulating material is sandwiched between two layers of metal wire.

Furthermore, a first end 19 and a second end 20, opposite to end 19, of the flexible metal hose 10 formed by the stripwound metal element 11 are respectively fixed to a first 21 and a second 22 rigid head support element, which are externally fixed to the metal bellow 5, on the cylindrical first end 7 and second end 8 of the metal bellow 5, respectively, so as to protrude radially outwards with respect to the metal bellow 5 from the side opposite to the flow guide liner 9.

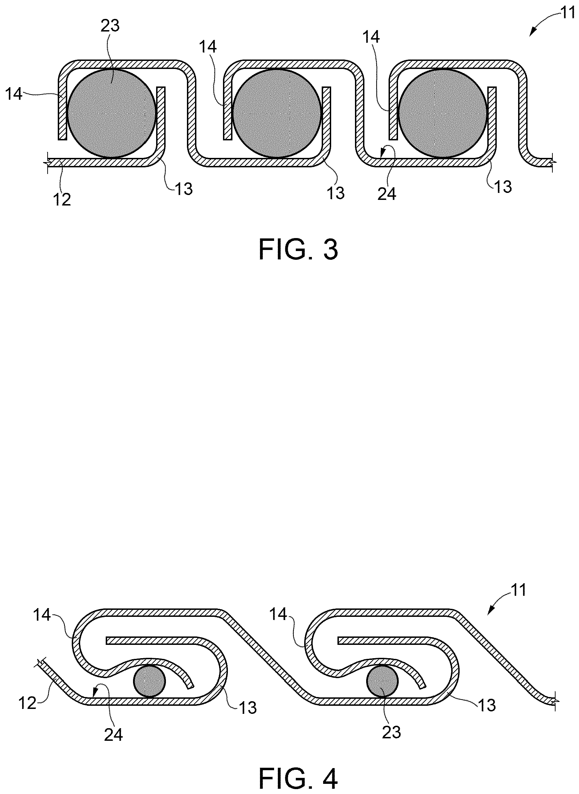

According to a preferred aspect of the invention and with reference to the Figures 3 and 4, a continuous sealing strip 23 is arranged between the seamed-together opposite lateral edges 13 and 14 of the helically wound metal strip 12 forming the helical stripwound metal element 11 with which the first flexible metal hose 10 is made, this also helically wound inside a continuous helical channel 24 formed by the coupling, via overlapping folding and respective mechanical connection (seaming), of the edges 13 and 14, so that the first flexible metal hose 10 is made fluid-tight, just like the metal bellow 5. Figures 3 and 4 show two possible embodiments of the folding of the edges 13 and 14, different from those shown in Figures 1 and 2.

In the embodiment in Figure 1, the flow guide liner 9 is defined by a section 25 of rigid pipe integrally fixed to the second end 8 of the metal bellow 5 and which extends axially, protruding from the second end 8 of the metal bellow 5 within the metal bellow 5 and towards the first end 7, for at least an entire section 26 of the metal bellow 10 provided with undulations 6 and radially spaced apart from the undulations 6.

Instead, in the embodiment in Figure 2, the flow guide liner 9 is defined by a second flexible metal hose 27 formed by a helical stripwound metal element obtained from a second metal strip 28, helically wound with its opposite lateral edges 29 and 30 seamed together so as to form a hose.

Opposite ends 31 (only one of which is visible in Figure 2, the other being symmetrical) of the flexible metal hose 27 are integrally fixed to the first end 7 and to the second end 8 of the metal bellow 5, inside said ends; the flexible metal hose 27 extends inside the metal bellow 5 for the entire length of the latter and is radially spaced apart from the undulations 6.

In both embodiments in Figures 1 and 2, the opposite ends 19 and 20 of the flexible metal hose 10 are respectively welded to the first rigid head support element 21 and to the second rigid head support element 22 by means of a welding bead 32 made using a process chosen from the group consisting of: TIG, MIG, MAG, laser, resistance roll seam and resistance spot welding.

In the embodiment in Figure 1, the rigid head support elements are indicated as 21b and 22b, are annular and have an L-shape in radial section; instead, in the embodiment in Figure 2, the rigid head support elements are indicated as 21c and 22c, are annular and have an asymmetric U-shape in radial section, the U being arranged parallel to axis A. In both embodiments, the L or U formed by elements 21 and 22 faces the side opposite to the thermally insulating material 17.

In particular, the thermally insulating material 17 completely fills an annular hollow space 33 delimited by the flexible metal bellow 5, by the first flexible metal hose 10 and by the opposite first and second rigid head support elements 21 and 22, so as to contribute to the overall rigidity of the device 1, as by being interposed between the undulations 6 it limits and dampens movements, in this way replacing the traditional damping pads, without however excessively increasing the rigidity of the system formed by bellow 5, flexible hose 10 and material 17, thanks to the presence of the gap or play 16.

Preferably, the metal bellow 5 with its annular undulations 6 and cylindrical ends 7 and 8, the rigid head support elements 21 and 22, the flow guide liner 9 and the flexible metal hose 10 all have a circular profile in a cross-section perpendicular to the axis of symmetry A of the flexible metal bellow 5, in order to achieve maximum flexibility.

All of the objects of the invention are thus achieved.

## Claims

1. A coupling device (1) for exhaust pipes (2 and 3) of endothermic engines, in particular designed to be arranged downstream of an exhaust manifold (4) of an endothermic engine, comprising a flexible metal bellow (5) provided with a plurality of annular undulations (6) axially spaced apart from one another and having a first (7) and a second (8) cylindrical ends, opposite to each other and free from undulations, a flow guide liner (9) radially arranged inside the metal bellow (5), with which it is coaxial, to shield the undulations, and a first flexible metal hose (10) radially arranged on the outside of the metal bellow (5), with which it is coaxial, to shield and protect the undulations; wherein:
i)- the first flexible metal hose (10) is formed by means of a helical stripwound metal element (11) obtained from a first metal strip (12), helically wound with its opposite lateral edges (13 and 14) seamed together so as to form a hose;,
ii)- a radial gap (16) is present between the first flexible metal hose (10) formed by the stripwound metal element (11) and respective radially outer ridges (15) of the undulations of the flexible metal bellow,
iii)- a first (19) and a second (20) opposite end of the first flexible metal hose (10) formed by the stripwound metal element (11) being fixed respectively to a first (21b,c) and a second (22b,c) rigid terminal support elements, which are externally fixed onto the metal bellow (5), to the first and second cylindrical ends (7 and 8) of the metal bellow respectively, so as to protrude radially outwards from the side opposite to the flow guide liner (9); **characterized in that**
iv)- a thermally insulating material (17) being arranged to completely fill said radial gap (16).

2. A coupling device (1) according to claim 1, **characterized in that** a continuous sealing strip (23) is arranged between the seamed-together opposite lateral edges (13 and 14) of the helically wound metal strip (12) forming the helical stripwound metal element (11) with which the first flexible metal hose (10) is made, so that the first flexible metal hose (10) is fluid-tight, just as the metal bellow (5).

3. A coupling device (1) according to claim 1 or 2, **characterized in that** the flow guide liner (9) is defined by a section of a rigid pipe (25) integrally fixed to the second end (8) of the metal bellow and which extends axially, protruding from the second end of the metal bellow within the metal bellow (5) and towards the first end (7) of the metal bellow, for at least an entire section (26) of the metal bellow provided with said undulations (6) and radially spaced apart from the undulations.

4. A coupling device (1) according to claim 1 or 2, **characterized in that** the flow guide liner (9) is defined by a second flexible metal hose (27) formed by a helical stripwound metal element obtained by a second metal strip (28), helically wound with its opposite lateral sides (29 and 30) seamed together so as to form a hose; opposite ends (31) of the second flexible metal hose (27) being integrally fixed to the first and second ends (7 and 8) of the metal bellow, inside the first and second ends of the metal bellow; the second flexible metal hose (27) extending within the metal bellow (5) for the entire length of the latter and radially spaced apart from the undulations (6).

5. A coupling device (1) according to any one of the preceding claims, **characterized in that** the first and second opposite ends (19 and 20) of the first flexible metal hose (10) are welded to the first and second rigid terminal support elements (21 and 22), respectively, by means of a welding bead (32) made using a process chosen from the group consisting of: TIG, MIG, MAG, laser, resistance roll seam and resistance spot welding.

6. A coupling device (1) according to any one of the preceding claims, **characterized in that** the thermally insulating material (17) is arranged to also fill respective axial spaces (18) present between one undulation (6) and another along the entire metal bellow (5), so that the thermally insulating material (17) completely fills an annular cavity (33) delimited by the flexible metal bellow (5), by the first flexible metal hose (10) and by the opposite first and second rigid terminal support elements (21 and 22), so as to contribute to the overall rigidity of the device.

7. A coupling device (1) according to any one of the preceding claims, **characterized in that** the thermally insulating material (17) is adapted to resist the temperatures present in the combusted gases of vehicles without alteration.

8. A coupling device (1) according to claim 7, **characterized in that** the thermally insulating material (17) is constituted by glass fibre or a ceramic fibre in mat, flock, foam or yarn form, possibly mixed and/or coupled with a metal material, preferably in the form of metal wire.

9. A coupling device (1) according to any one of the preceding claims, **characterized in that** the metal bellow (5) with its annular undulations (6) and cylindrical ends (7 and 8), the rigid terminal support elements (21 and 22), the flow guide liner (9) and the first flexible metal hose (10) all have a circular profile in a cross-section perpendicular to an axis of symmetry of the flexible metal bellows.

10. A coupling device (1) according to any one of the preceding claims, **characterized in that** the rigid terminal support elements (21 and 22) are annular and are either L-shaped (21b and 22b) or U-shaped (21c and 22c) in radial section.

## Patentansprüche

1. Kopplungsvorrichtung (1) für Auspuffrohre (2 und 3) von endothermen Motoren, die insbesondere dafür ausgelegt ist, hinter einem Auspuffkrümmer (4) eines endothermen Motors angeordnet zu werden, welche Folgendes aufweist: einen flexiblen Metallbalg (5), der mit mehreren ringförmigen Wellungen (6), die axial voneinander beabstandet sind, versehen ist und ein erstes zylindrisches Ende (7) und ein zweites zylindrisches Ende (8) aufweist, die einander entgegengesetzt sind und von Wellungen frei sind, einen Strömungsführungsmantel (9), der radial innerhalb des Metallbalgs (5) angeordnet ist, womit er koaxial ist, um die Wellungen abzuschirmen, und einen ersten flexiblen Metallschlauch (10), der radial auf der Außenseite des Metallbalgs (5) angeordnet ist, womit er koaxial ist, um die Wellungen abzuschirmen und zu schützen, wobei:
i) der erste flexible Metallschlauch (10) durch ein helikales streifenförmig gewickeltes Metallelement (11) gebildet ist, das von einem ersten Metallstreifen (12) erhalten wurde, der helikal gewickelt wurde, wobei seine entgegengesetzten Seitenränder (13 und 14) zur Bildung eines Schlauchs über eine Naht miteinander verbunden sind,
ii) ein radialer Zwischenraum (16) zwischen dem durch das streifenförmig gewickelte Metallelement (11) gebildeten ersten flexiblen Metallschlauch (10) und jeweiligen radial äußeren Rücken (15) der Wellungen des flexiblen Metallbalgs vorhanden ist,
iii) ein erstes (19) und ein zweites (20) entgegengesetztes Ende des ersten flexiblen Metallschlauchs (10), der durch das streifenförmig gewickelte Metallelement (11) gebildet ist, jeweils fest an einem ersten starren Abschlusstragelement (21b,c) und einem zweiten starren Abschlusstragelement (22b,c) angebracht sind, die am ersten bzw. am zweiten zylindrischen Ende (7 und 8) des Metallbalgs außen am Metallbalg (5) befestigt sind, so dass sie von der dem Strömungsführungsmantel (9) entgegengesetzten Seite radial nach außen vorstehen,
**dadurch gekennzeichnet, dass**
iv) ein thermisch isolierendes Material (17) dafür eingerichtet ist, den radialen Zwischenraum (16) vollkommen zu füllen.

2. Kopplungsvorrichtung (1) nach Anspruch 1, **dadurch gekennzeichnet, dass** ein kontinuierlicher Dichtungsstreifen (23) zwischen den über eine Naht verbundenen entgegengesetzten Seitenrändern (13 und 14) des helikal gewickelten Metallstreifens (12), der das helikale streifenförmig gewickelte Metallelement (11) bildet, mit dem der erste flexible Metallschlauch (10) hergestellt ist, angeordnet ist, so dass der erste flexible Metallschlauch (10) ebenso wie der Metallbalg (5) fluiddicht ist.

3. Kopplungsvorrichtung (1) nach Anspruch 1 oder 2, **dadurch gekennzeichnet, dass** der Strömungsführungsmantel (9) durch einen Abschnitt einer starren Leitung (25) definiert ist, der integral am zweiten Ende (8) des Metallbalgs befestigt ist und sich axial vom zweiten Ende des Metallbalgs innerhalb des Metallbalgs (5) und zum ersten Ende (7) des Metallbalgs zumindest über einen gesamten Abschnitt (26) des Metallbalgs, der mit den Wellungen (6) versehen ist, und radial von den Wellungen beabstandet erstreckt.

4. Kopplungsvorrichtung (1) nach Anspruch 1 oder 2, **dadurch gekennzeichnet, dass** der Strömungsführungsmantel (9) durch einen zweiten flexiblen Metallschlauch (27) definiert ist, der durch ein helikales streifenförmig gewickeltes Metallelement gebildet ist, das durch einen zweiten Metallstreifen (28) erhalten wurde, der helikal gewickelt wurde, wobei seine entgegengesetzten lateralen Seiten (29 und 30) zur Bildung eines Schlauchs über eine Naht miteinander verbunden wurden, wobei die entgegengesetzten Enden (31) des zweiten flexiblen Metallschlauchs (27) innerhalb des ersten und des zweiten Endes des Metallbalgs integral am ersten und am zweiten Ende (7 und 8) des Metallbalgs befestigt sind und wobei sich der zweite flexible Metallschlauch (27) über die gesamte Länge des Metallbalgs (5) innerhalb von diesem erstreckt und von den Wellungen (6) radial beabstandet ist.

5. Kopplungsvorrichtung (1) nach einem der vorhergehenden Ansprüche, **dadurch gekennzeichnet, dass** das erste und das zweite entgegengesetzte Ende (19 und 20) des ersten flexiblen Metallschlauchs (10) an das erste bzw. das zweite starre Abschlusstragelement (21 und 22) durch eine Schweißnaht geschweißt wurden, die unter Verwendung eines Verfahrens hergestellt wurde, das aus der Gruppe TIG-, MIG-, MAG-, Laser-, Widerstandswalznaht- und Widerstandspunktschweißen ausgewählt wurde.

6. Kopplungsvorrichtung (1) nach einem der vorhergehenden Ansprüche, **dadurch gekennzeichnet, dass** das thermisch isolierende Material (17) dafür eingerichtet ist, auch jeweilige axiale Räume (18) zu füllen, die sich zwischen einer Wellung (6) und einer anderen entlang dem gesamten Metallbalg (5) befinden, so dass das thermisch isolierende Material (17) einen ringförmigen Hohlraum (33), der durch den flexiblen Metallbalg (5), den ersten flexiblen Metallschlauch (10) und das erste und das zweite starre Abschlusstragelement (21 und 22), die einander entgegengesetzt sind, begrenzt ist, vollständig füllt, um zur Gesamtsteifigkeit der Vorrichtung beizutragen.

7. Kopplungsvorrichtung (1) nach einem der vorhergehenden Ansprüche, **dadurch gekennzeichnet, dass** das thermisch isolierende Material (17) dafür eingerichtet ist, den in den Verbrennungsgasen von Fahrzeugen vorhandenen Temperaturen ohne Änderung zu widerstehen.

8. Kopplungsvorrichtung (1) nach Anspruch 7, **dadurch gekennzeichnet, dass** das thermisch isolierende Material (17) durch eine Glasfaser oder eine Keramikfaser in Matten-, Flocken-, Schaum- oder Garnform, möglicherweise mit einem Metallmaterial, vorzugsweise in Form eines Metalldrahts, gemischt und/oder gekoppelt, gebildet ist.

9. Kopplungsvorrichtung (1) nach einem der vorhergehenden Ansprüche, **dadurch gekennzeichnet, dass** der Metallbalg (5) mit seinen ringförmigen Wellungen (6) und zylindrischen Enden (7 und 8), die starren Abschlusstragelemente (21 und 22), der Strömungsführungsmantel (9) und der erste flexible Metallschlauch (10) alle in einem zu einer Symmetrieachse des flexiblen Metallbalgs senkrechten Querschnitt ein kreisförmiges Profil aufweisen.

10. Kopplungsvorrichtung (1) nach einem der vorhergehenden Ansprüche, **dadurch gekennzeichnet, dass** die starren Abschlusstragelemente (21 und 22) ringförmig sind und im radialen Querschnitt entweder L-förmig (21b und 22b) oder U-förmig (21c und 22c) sind.

## Revendications

1. Dispositif de couplage (1) pour des tuyaux d'échappement (2 et 3) de moteurs endothermiques, conçu en particulier pour être agencé en aval d'un collecteur d'échappement (4) d'un moteur endothermique, comprenant un soufflet métallique flexible (5) doté d'une pluralité d'ondulations annulaires (6) espacées axialement les unes des autres et ayant des première (7) et seconde (8) extrémités cylindriques, opposées l'une à l'autre et dépourvues d'ondulations, un revêtement de guidage de flux (9) agencé radialement à l'intérieur du soufflet métallique (5), avec lequel il est coaxial, pour mettre à l'abri les ondulations, et un premier tube métallique flexible (10) agencé radialement sur l'extérieur du soufflet métallique (5), avec lequel il est coaxial, pour mettre à l'abri et protéger les ondulations ; dans lequel :
i) - le premier tube métallique flexible (10) est formé au moyen d'un élément métallique (11) à bande enroulée hélicoïdale, obtenu à partir d'une première bande métallique (12), enroulée en hélice avec ses bords latéraux opposés (13 et 14) joints l'un à l'autre pour former un tube ;
ii) - un espace radial (16) est présent entre le premier tube métallique flexible (10) formé par l'élément métallique (11) à bande enroulée hélicoïdale et des arêtes radialement externes respectives (15) des ondulations du soufflet métallique flexible,
iii) - des première (19) et seconde (20) extrémités opposées du premier tube métallique flexible (10) formées par l'élément métallique (11) à bande enroulée hélicoïdale étant fixées respectivement à des premier (21b, c) et second (22b, c) éléments de support terminal rigides, qui sont fixés en externe sur le soufflet métallique (5), aux première et seconde extrémités cylindriques (7 et 8) du soufflet métallique respectivement, de façon à faire saillie radialement vers l'extérieur depuis le côté opposé au revêtement de guidage de flux (9) ; **caractérisé en ce que**
iv) - un matériau d'isolation thermique (17) est agencé pour remplir complètement ledit espace radial (16).

2. Dispositif de couplage (1) selon la revendication 1, **caractérisé en ce qu'**une bande d'étanchéité continue (23) est agencée entre les bords latéraux opposés joints ensemble (13 et 14) de la bande métallique enroulée en hélice (12) formant l'élément métallique (11) à bande enroulée hélicoïdale, avec lequel le premier tube métallique flexible (10) est fabriqué, de sorte que le premier tube métallique flexible (10) est étanche au fluide, comme le soufflet métallique (5).

3. Dispositif de couplage (1) selon la revendication 1 ou 2, **caractérisé en ce que** le revêtement de guidage de flux (9) est défini par une section d'un tuyau rigide (25) fixé intégralement à la seconde extrémité (8) du soufflet métallique et qui s'étend axialement, faisant saillie depuis la seconde extrémité du soufflet métallique à l'intérieur du soufflet métallique (5) et vers la première extrémité (7) du soufflet métallique, pour au moins une section entière (26) du soufflet métallique dotée desdites ondulations (6) et radialement espacée des ondulations.

4. Dispositif de couplage (1) selon la revendication 1 ou 2, **caractérisé en ce que** le revêtement de guidage de flux (9) est défini par un second tube métallique flexible (27) formé par un élément métallique à bande enroulée hélicoïdale, obtenu par une seconde bande métallique (28), enroulée en hélice avec ses côtés latéraux opposés (29 et 30) joints l'un à l'autre pour former un tube ; des extrémités opposées (31) du second tube métallique flexible (27) étant fixées intégralement aux première et seconde extrémités (7 et 8) du soufflet métallique, à l'intérieur des première et seconde extrémités du soufflet métallique ; le second tube métallique flexible (27) s'étendant à l'intérieur du soufflet métallique (5) pour la totalité de la longueur de ce dernier et étant espacé radialement des ondulations (6).

5. Dispositif de couplage (1) selon l'une quelconque des revendications précédentes, **caractérisé en ce que** les première et seconde extrémités opposées (19 et 20) du premier tube métallique flexible (10) sont soudées aux premier et second éléments de support terminal rigides (21 et 22), respectivement, au moyen d'une perle de soudure (32) fabriquée en utilisant un procédé choisi dans le groupe constitué par : TIG, MIG, MAG, laser, soudage à molette de résistance et soudage par points par résistance.

6. Dispositif de couplage (1) selon l'une quelconque des revendications précédentes, **caractérisé en ce que** le matériau d'isolation thermique (17) est agencé pour remplir également des espaces axiaux respectifs (18) présents entre une ondulation (6) et une autre le long de la totalité du soufflet métallique (5), de sorte que le matériau d'isolation thermique (17) remplit complètement une cavité annulaire (33) délimitée par le soufflet métallique flexible (5), par le premier tube métallique flexible (10) et par les premier et second éléments de support terminal rigides (21 et 22), de façon à contribuer à la rigidité globale du dispositif.

7. Dispositif de couplage (1) selon l'une quelconque des revendications précédentes, **caractérisé en ce que** le matériau à isolation thermique (17) est conçu pour résister aux températures présentes dans les gaz de combustion de véhicules sans altération.

8. Dispositif de couplage (1) selon la revendication 7, **caractérisé en ce que** le matériau d'isolation thermique (17) est constitué de fibres de verre ou de fibres céramiques sous forme de tapis, de matière à floquer, de mousse ou de fil, éventuellement mélangé et/ou couplé à un matériau métallique, de préférence sous forme de fil métallique.

9. Dispositif de couplage (1) selon l'une quelconque des revendications précédentes, **caractérisé en ce que** le soufflet métallique (5) avec ses ondulations annulaires (6) et extrémités cylindriques (7 et 8), les éléments de support terminal rigides (21 et 22), le revêtement de guidage de flux (9) et le premier tube métallique flexible (10) ont tous un profil circulaire dans une section transversale perpendiculaire à un axe de symétrie des soufflets métalliques flexibles.

10. Dispositif de couplage (1) selon l'une quelconque des revendications précédentes, **caractérisé en ce que** les éléments de support terminal rigides (21 et 22) sont annulaires et sont soit en forme de L (21b et 22b), soit en forme de U (21c et 22c) en section radiale.
